# EUROPEAN PATENT APPLICATION

(11) **EP 4 769 897 A1**
(43) Date of publication of application: **01.07.2026**
(21) Application number: 24930216.7
(22) Date of filing: 16.04.2024
(51) Int. Cl.: H02J 9/06, H02J 7/00, H02J 7/35

(54) **ENERGY FLOW CONTROL METHOD AND SYSTEM SUPPORTING INTERVENTION OF AUXILIARY POWER SUPPLY**

(30) Priority: 20.03.2024 CN 202410325365
(71) Applicant: Sineng Electric Co., Ltd., Wuxi, Jiangsu 214174 (CN); Suzhou Qiancheng New Energy Technology Co., Ltd., Suzhou, Jiangsu 215101 (CN)
(72) Inventor: DING, Jiajie, Wuxi, Jiangsu 214174 (CN); DU, Hui, Wuxi, Jiangsu 214174 (CN); DONG, Miao, Wuxi, Jiangsu 214174 (CN); LIU, Baodong, Wuxi, Jiangsu 214174 (CN); XIAO, Liujie, Wuxi, Jiangsu 214174 (CN)
(74) Representative: Bayramoglu et al.
(86) International application number: PCT/CN2024/087954
(87) International publication number: WO 2025/194547

(57) **Abstract**

This application relates to the field of power supply control technologies, and provides an energy flow control method and system supporting auxiliary power supply intervention. The method includes: determining whether a smart meter is connected; reading data of the smart meter if the smart meter is connected; otherwise, using data of a load-side sensor; performing output power determining on current data of the smart meter or current data of the load-side sensor when a primary power supply is disconnected, to obtain an output power determining result; and performing energy flow control on battery charging/discharging or a direct current energy source such as a PV photovoltaic panel by using a preset energy scheduling closed-loop of an auxiliary power supply based on the output power determining result. This application can resolve the problem that when a primary power supply and an auxiliary power supply are connected to the same interface using a switching auxiliary device, the user is required to independently set a specific mode, thereby increasing the user's learning costs, and can provide multiple options and ease of use for the user's alternating current power supply input, and provide an important guarantee for emergency safety of an energy system.

## Description

This application claims priority to Chinese Patent Application No. 202410325365.5, filed with the China National Intellectual Property Administration on March 20, 2024, entitled "ENERGY FLOW CONTROL METHOD AND SYSTEM SUPPORTING AUXILIARY POWER SUPPLY INTERVENTION", the entire contents of which are incorporated herein by reference.

### TECHNICAL FIELD

This application relates to the field of power supply control technologies, and in particular, to an energy flow control method and system supporting auxiliary power supply intervention.

### BACKGROUND TECHNOLOGY

As energy supply manners increase, a requirement of an energy storage inverter for different power supply manners is also increasing. An existing power grid side/alternating current side only supports connection to the mains supply, and the control logic does not have complete protection against zero power output. Only connection through a single interface for a unidirectional auxiliary power supply (such as a generator) is supported, increasing hardware costs. A primary power supply and an auxiliary power supply can be connected to the same interface using a switching auxiliary device. However, the user is required to independently set a specific mode, thereby increasing the user's learning costs. Therefore, there is an urgent need to provide an energy flow control method supporting auxiliary power supply intervention, so as to resolve a problem that when a primary power supply and an auxiliary power supply are connected to the same interface using a switching auxiliary device, the user is required to independently set a specific mode, thereby increasing the user's learning costs.

### CONTENT OF APPLICATION

This application provides an energy flow control method supporting auxiliary power supply intervention, so as to resolve a problem that when a primary power supply and an auxiliary power supply are connected to the same interface using a switching auxiliary device, the user is required to independently set a specific mode, thereby increasing the user's learning costs.

According to a first aspect, this application provides an energy flow control method supporting auxiliary power supply intervention, where the method includes the following steps:
determining whether a smart meter is connected;
reading data of the smart meter if the smart meter is connected; otherwise, using data of a load-side sensor;
performing output power determining on current data of the smart meter or current data of the load-side sensor when a primary power supply is disconnected, to obtain an output power determining result; and
performing energy flow control on battery charging/discharging or a direct current energy source by using a preset energy scheduling closed-loop of an auxiliary power supply based on the output power determining result.

Optionally, before the step of reading data of the smart meter if the smart meter is connected; otherwise, using data of a load-side sensor, the method further includes:
reading an enable state of the auxiliary power supply, where the enable state of the auxiliary power supply includes an on state and an off state; and
after the on state of the auxiliary power supply is read, when the primary power supply is disconnected, switching to the auxiliary power supply by using an automatic switching signal to send a signal for switching to the auxiliary power supply.

Optionally, the step of reading data of the smart meter includes:
reading a set value of a user; and
reading, based on the set value of the user, the data of the smart meter when the primary power supply is disconnected.

Optionally, the step of performing output power determining on current data of the smart meter or current data of the load-side sensor when a primary power supply is disconnected, to obtain an output power determining result includes:
performing first output power determining on the current data of the smart meter or the current data of the load-side sensor when the primary power supply is disconnected, to determine that an output power needs to be increased; and
performing second output power determining on the current data of the smart meter or the current data of the load-side sensor, to determine that the output power needs to be reduced.

Optionally, the step of performing energy flow control on battery charging/discharging or a direct current energy source by using a preset energy scheduling closed-loop of an auxiliary power supply based on the output power determining result includes:
when the output power determining result is that the output power is increased, increasing an energy flow for the battery charging/discharging or the direct current energy source by using the preset energy scheduling closed-loop of the auxiliary power supply, and reducing an energy flow input of the auxiliary power supply in a steady-state regulation phase; or
when the output power determining result is that the output power is reduced, maintaining an energy flow for the battery charging/discharging or the direct current energy source by using the preset energy scheduling closed-loop of the auxiliary power supply, and cutting off a system output.

Optionally, after the step of performing energy flow control on battery charging/discharging or a direct current energy source by using a preset energy flow control closed-loop of an auxiliary power supply based on the output power determining result, the method further includes:
when the primary power supply is recovered, switching from the auxiliary power supply side to the primary power supply side by using the automatic switching signal to send a signal for switching from the auxiliary power supply to the primary power supply, and exiting the preset energy scheduling closed-loop of the auxiliary power supply to restore normal energy scheduling configuration for the user.

According to a second aspect, this application further provides an energy flow control system supporting auxiliary power supply intervention, where the energy flow control system supporting auxiliary power supply intervention is configured to perform the energy flow control method supporting auxiliary power supply intervention provided in the embodiments of this application.

According to a third aspect, this application further provides a real-time operating system for an embedded computer in a hybrid energy storage inverter. The system includes a hardware computer platform and an energy flow control system supporting auxiliary power supply intervention, and the hardware computer platform is provided with an energy management system. The energy flow control system supporting auxiliary power supply intervention provided in the embodiments of this application is embedded into the management system of the hardware computer platform.

According to a fourth aspect, this application further provides an electronic device, including a memory, a processor, and a computer program that is stored in the memory and that is capable of running on the processor. When the processor executes the computer program, the steps of the energy flow control method supporting auxiliary power supply intervention provided in the embodiments of this application are implemented.

According to a fifth aspect, an embodiment of this application provides a computer-readable storage medium. The computer-readable storage medium stores a computer program, and when the computer program is executed by a processor, the steps of the energy flow control method supporting auxiliary power supply intervention provided in the embodiments of this application are implemented.

Beneficial effects of this application are as follows: The energy flow control method supporting auxiliary power supply intervention provided in this application determines whether a smart meter is connected; if the smart meter is connected, the smart meter data is read; otherwise, the load-side sensor data is used. When the primary power supply is disconnected, the method determines the output power based on the current data from the smart meter or the load-side sensor, to obtain an output power determining result. Based on the output power determining result, the method performs energy flow control on battery charging/discharging or a direct current energy source such as a PV photovoltaic panel by using a preset energy scheduling closed-loop of an auxiliary power supply. This can resolve the problem that when a primary power supply and an auxiliary power supply are connected to the same interface using a switching auxiliary device, the user is required to independently set a specific mode, thereby increasing the user's learning costs, and can provide multiple options and achieve ease of use for the user's alternating current power supply input, and provide an important guarantee for emergency safety of an energy system.

### DESCRIPTION OF THE DRAWINGS

To describe the technical solutions in the embodiments of this application or in the conventional technology more clearly, the following briefly describes the accompanying drawings required for describing the embodiments or the conventional technology. Clearly, the accompanying drawings in the following description show merely some embodiments of this application, and a person of ordinary skill in the art may still derive other accompanying drawings from these accompanying drawings without creative efforts.
FIG. 1 is a flowchart of an energy flow control method supporting auxiliary power supply intervention according to an embodiment of this application;
FIG. 2 is a flowchart of another energy flow control method supporting auxiliary power supply intervention according to an embodiment of this application;
FIG. 3 is a connection diagram of a hardware device of an energy flow control method supporting auxiliary power supply intervention according to an embodiment of this application;
FIG. 4 is a modular structural diagram of an energy flow control method supporting auxiliary power supply intervention according to an embodiment of this application;
FIG. 5 is a flowchart of another energy flow control method supporting auxiliary power supply intervention according to an embodiment of this application;
FIG. 6 is a schematic diagram of a structure of an energy flow control system supporting auxiliary power supply intervention according to an embodiment of this application;
FIG. 7 is a schematic diagram of a structure of a real-time operating system for an embedded computer in a hybrid energy storage inverter according to an embodiment of this application; and
FIG. 8 is a schematic diagram of a structure of an electronic device according to an embodiment of this application.

### IMPLEMENTATIONS OF THE INVENTION

The following clearly and completely describes the technical solutions in the embodiments of this application with reference to the accompanying drawings in the embodiments of this application. Clearly, the described embodiments are merely some rather than all of the embodiments of this application. All other embodiments obtained by a person of ordinary skill in the art based on the embodiments of this application without creative efforts shall fall within the protection scope of this application.

In this application, the method determines whether a smart meter is connected; if the smart meter is connected, the smart meter data is read; otherwise, the load-side sensor data is used. When the primary power supply is disconnected, the method determines the output power based on the current data from the smart meter or the load-side sensor, to obtain an output power determining result. Based on the output power determining result, the method performs energy flow control on battery charging/discharging or a direct current energy source such as a PV photovoltaic panel by using a preset energy scheduling closed-loop of an auxiliary power supply. This can resolve the problem that when a primary power supply and an auxiliary power supply are connected to the same interface using a switching auxiliary device, the user is required to independently set a specific mode, thereby increasing the user's learning costs, and can provide multiple options and achieve ease of use for the user's alternating current power supply input, and provide an important guarantee for emergency safety of an energy system.

### Embodiment 1

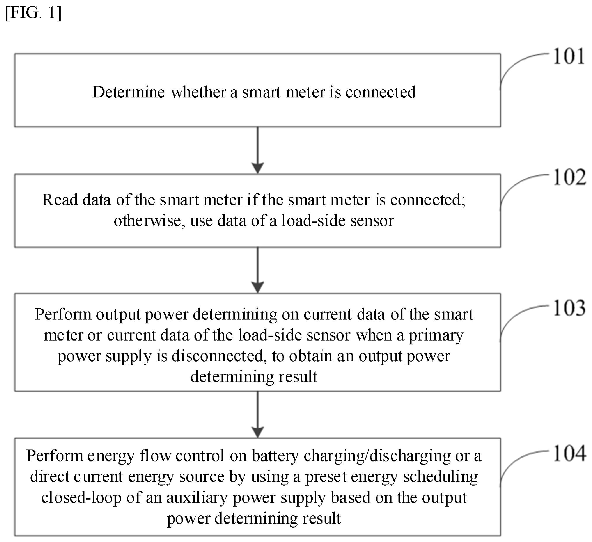

As shown in FIG. 1, FIG. 1 is a flowchart of an energy flow control method supporting auxiliary power supply intervention according to an embodiment of this application. The energy flow control method supporting auxiliary power supply intervention includes the following steps:
101: Determine whether a smart meter is connected.

In this embodiment of this application, the energy flow control method supporting auxiliary power supply intervention is applied to a real-time operating system for an embedded computer in a hybrid energy storage inverter. The auxiliary power supply may be understood as a backup power supply that provides power support for a primary device or a system, and the auxiliary power supply supports power supply devices having a plurality of types of energy supply capabilities, such as bidirectional and unidirectional energy supply capabilities. The auxiliary power supply may be a generator, an oil engine, a diesel generator, another type of generator, or the like.

The foregoing smart meter is an electronic device that can monitor and record power usage status in real time. The smart meter has a digital display screen and can display information such as real-time power consumption and remaining power, and supports a remote meter reading function and can send data to a remote server or a local computer system by using a wireless communication technology, so that a user and a power company know a power usage status in real time, thereby implementing more accurate billing and more effective energy management.

102: Read data of the smart meter if the smart meter is connected; otherwise, use data of a load-side sensor.

In this embodiment of this application, the foregoing data of the smart meter may be a parameter and a load status working condition of the smart meter.

The foregoing load-side sensor is a detection device used to measure a load current and voltage in a circuit, and the data of the load-side sensor includes but is not limited to data such as a voltage, a current, and a frequency.

In some embodiments, the data of the AC-side sensor may alternatively be used. The AC-side sensor is a detection device for measuring a load current and voltage in a circuit, and the data of the AC-side sensor refers to parameters such as a voltage and a current in an alternating current circuit. The data of the AC-side sensor is measured by using the sensor to monitor a running status of the circuit.

Further, a set value of the user is read, and the parameter and the load status working condition of the smart meter are read based on the set value of the user when a primary power supply is disconnected. If the smart meter is not connected, a parameter and a load status working condition of the load-side sensor, and a parameter and a load status working condition of the AC-side sensor are read.

The foregoing set value of the user includes turn-on of a function switch of the generator, a power of the connected generator, a mode setting for the generator, a meter status, and the like.

103: Perform output power determining on current data of the smart meter or current data of the load-side sensor when a primary power supply is disconnected, to obtain an output power determining result.

In this embodiment of this application, the foregoing primary power supply may be understood as a main power supply that provides power support for an entire device or system, and includes but is not limited to an AC side, an alternating current side, a power grid side, and the like.

The foregoing output power determining may be understood as a process of determining an output power of the system based on the data of the smart meter.

The foregoing output power determining result includes increasing the output power and reducing the output power.

It should be noted that, after the primary power supply is disconnected and switched to the auxiliary power supply, the parameter and the load status working condition of the smart meter or the load-side sensor are read, so as to determine whether it is necessary to increase the output power or reduce the output power for battery charging/discharging or a direct current energy source such as a PV photovoltaic panel.

104: Perform energy flow control on battery charging/discharging or a direct current energy source by using a preset energy scheduling closed-loop of an auxiliary power supply based on the output power determining result.

In this embodiment of this application, the foregoing preset energy scheduling closed-loop of the auxiliary power supply may be understood as a bidirectional dual-thread power energy flow scheduling and control closed-loop of the auxiliary power supply. The bidirectional dual-thread power energy flow scheduling and control closed-loop of the auxiliary power supply may be understood as performing energy flow control based on a bidirectional dual-thread closed-loop by using a method for energy flow control based on a bidirectional dual-thread closed-loop, so as to always maintain stable power scheduling and always establish a complete data flow, thereby providing stable, safe, and reliable connection of a unidirectional auxiliary power supply for the device. The foregoing bidirectional dual-thread power energy flow scheduling and control closed-loop of the auxiliary power supply can monitor and adjust energy allocation in real time, so as to ensure stable running of the system.

The foregoing bidirectional means that the inverter obtains multi-terminal data communication on a bus and returns a control value. The foregoing dual-thread means that when controlling the power of the energy flow, the inverter uses charging/discharging energy of the battery and output energy of the inverter to synchronously control the power energy flow of the system.

The foregoing direct current energy source is a PV photovoltaic panel, or the like.

The foregoing energy flow control may be understood as adjusting energy allocation and utilization to maintain stability and balance of the system.

In a possible embodiment, when the output power determining result is that the output power is increased, an energy flow is increased for the battery charging/discharging or the direct current energy source such as a PV photovoltaic panel by using the preset energy scheduling closed-loop of the auxiliary power supply, to maximize the charging/discharging power of the inverter and the battery; and the output energy of the inverter is adjusted in a steady-state regulation phase, so as to reduce an energy flow input of the auxiliary power supply and avoid outputting energy to the auxiliary power supply node, thereby preventing impact on an auxiliary power supply device that has only a unidirectional energy output capability, and thus avoiding causing irreversible damage.

The foregoing steady-state regulation phase may be understood as maintaining the system in a stable state.

In another possible embodiment, when the output power determining result is that the output power is reduced, an energy flow is maintained for the battery charging/discharging or the direct current energy source such as a PV photovoltaic panel by using the preset energy scheduling closed-loop of the auxiliary power supply, and the output of the output energy of the inverter is cut off with a millisecond-level response, so as to avoid an instantaneous energy overflow to the auxiliary power supply node. Dual-thread control is mutually complementary and interdependent, without using single control data as a unique reference value for energy scheduling flow, so that there is a good steady-state regulation capability and an extremely high transient protection capability.

It should be noted that, in this application, when the smart meter is used, zero power output is achieved based on meter power scheduling; and when the data of the AC-side sensor and the data of the load-side sensor are used, an energy flow that ensures internal circulation of the system may be calculated based on all the data of the sensors, so as to prevent power output to the outside of the system.

In this embodiment of this application, in this application, after the primary power supply loses a power supply capability, an automatic switching signal can be used to send a signal for switching to the auxiliary power supply, to switch to the auxiliary power supply mode, and energy flow control can be performed on battery charging/discharging or a direct current energy source such as a PV photovoltaic panel by using a preset energy scheduling closed-loop of the auxiliary power supply. After the power supply of the primary power supply restores the power supply capability, the automatic switching device switches from the auxiliary power supply side to the primary power supply side, turns off the auxiliary power supply, exits the bidirectional dual-thread power energy scheduling and control closed-loop of the power supply, and restores the original user setting mode.

In this embodiment, in this application, without increasing hardware costs, the primary power supply and the auxiliary power supply may be used as alternating current energy of the system for the user to use, by using an existing alternating current power supply interface and an automatic switching apparatus. The bidirectional dual-thread closed-loop and energy flow control closed-loop of the auxiliary power supply can ensure that the energy flow is stable, safe, and reliable, both the output power of the entire inverter and the charging/discharging power of the battery follow the energy flow closed-loop in the case of the auxiliary power supply, and the energy overflow is precisely controlled, thereby reducing a risk of easily causing damage to the auxiliary power supply when the auxiliary power supply is a unidirectional power supply, resolving a problem that an inverter device does not support connection of an auxiliary power supply when leaving the factory, providing a safe and reliable solution, and optimizing product performance.

In this embodiment of this application, the method determines whether a smart meter is connected; if the smart meter is connected, the smart meter data is read; otherwise, the load-side sensor data is used. When the primary power supply is disconnected, the method determines the output power based on the current data from the smart meter or the load-side sensor, to obtain an output power determining result. Based on the output power determining result, the method performs energy flow control on battery charging/discharging or a direct current energy source by using a preset energy scheduling closed-loop of an auxiliary power supply. The method determines whether a smart meter is connected; if the smart meter is connected, the smart meter data is read; otherwise, the load-side sensor data is used. When the primary power supply is disconnected, the method determines the output power based on the current data from the smart meter or the load-side sensor, to obtain an output power determining result. Based on the output power determining result, the method performs energy flow control on battery charging/discharging or a direct current energy source such as a PV photovoltaic panel by using a preset energy scheduling closed-loop of an auxiliary power supply. This can resolve the problem that when a primary power supply and an auxiliary power supply are connected to the same interface using a switching auxiliary device, the user is required to independently set a specific mode, thereby increasing the user's learning costs, and can provide multiple options and ease of use for the user's alternating current power supply input, and provide an important guarantee for emergency safety of an energy system.

Optionally, before the step of reading data of the smart meter if the smart meter is connected; otherwise, using data of a load-side sensor, an enable state of the auxiliary power supply may be further read; and after an on state of the auxiliary power supply is read, when the primary power supply is disconnected, the auxiliary power supply is switched to by using an automatic switching signal to send a signal for switching to the auxiliary power supply.

In this embodiment of this application, the foregoing enable state of the auxiliary power supply includes the on state and an off state.

The foregoing enable state of the auxiliary power supply includes the on state and the off state. The foregoing on state may be understood as that the auxiliary power supply is connected to a system by using a connection interface, and can start to supply power to the system at any time. The foregoing off state may be understood as that the auxiliary power supply stops working.

The foregoing automatic switching signal is an automatic switching signal sent by an AC-side multi-terminal switching device. The AC-side multi-terminal power supply switching device is an apparatus having automatic switching and outputting a corresponding level signal, and is configured to: when the primary power supply is disconnected, the apparatus outputs a level signal to inform a link device that "the primary power supply is disconnected", and switches to the auxiliary power supply on a hardware circuit, so as to provide a switchable alternating current input capability for an inverter.

It should be noted that, the enable state of the auxiliary power supply is read to learn whether the auxiliary power supply is currently in a normal working state.

Further, when the read enable state of the auxiliary power supply is the on state, and when the primary power supply has no power output, a switching signal is sent by using the automatic switching device, to switch to the auxiliary power supply.

Optionally, in the step of reading data of the smart meter, a set value of a user may be read; and based on the set value of the user, the data of the smart meter is read when the primary power supply is disconnected.

In this embodiment of this application, the foregoing set value of the user includes turn-on of a function switch of the generator, a power of the connected generator, a mode setting for the generator, a meter status, and the like.

The foregoing data of the smart meter includes a parameter, a load status working condition, and the like of the smart meter.

It should be noted that, the set value of the user is first read, and when the primary power supply is disconnected, after switching to the auxiliary power supply, the parameter and the load status working condition of the smart meter are read.

Optionally, in the step of performing output power determining on current data of the smart meter or current data of the load-side sensor when a primary power supply is disconnected, to obtain an output power determining result, first output power determining may be performed on the current data of the smart meter or the current data of the load-side sensor when the primary power supply is disconnected, to determine that an output power needs to be increased; and second output power determining may be performed on the current data of the smart meter or the current data of the load-side sensor, to determine that the output power needs to be reduced.

In this embodiment of this application, when the primary power supply is disconnected, it is necessary to perform the first output power determining based on the current parameter and the current load status working condition of the smart meter or the load-side sensor, to determine that the output power needs to be increased for battery charging/discharging or a direct current energy source such as a PV photovoltaic panel; or when the primary power supply is disconnected, it is necessary to perform the second output power determining based on the current parameter and the current load status working condition of the smart meter or the load-side sensor, to determine that the output power needs to be reduced for battery charging/discharging or a direct current energy source such as a PV photovoltaic panel.

It should be noted that, after the primary power supply is disconnected and switched to the auxiliary power supply, the parameter and the load status working condition of the smart meter or the load-side sensor is read, so as to determine whether it is necessary to increase the output power or reduce the output power for battery charging/discharging or a direct current energy source such as a PV photovoltaic panel.

Optionally, in the step of performing energy flow control on battery charging/discharging or a direct current energy source by using a preset energy flow scheduling closed-loop of an auxiliary power supply based on the output power determining result, when the output power determining result is that the output power is increased, an energy flow may be increased for the battery charging/discharging or the direct current energy source by using the preset energy scheduling closed-loop of the auxiliary power supply, and an energy flow input of the auxiliary power supply may be reduced in a steady-state regulation phase; or when the output power determining result is that the output power is reduced, an energy flow may be maintained for the battery charging/discharging or the direct current energy source by using the preset energy scheduling closed-loop of the auxiliary power supply, and a system output may be cut off.

In this embodiment of this application, the foregoing preset energy scheduling closed-loop of the auxiliary power supply may be understood as a bidirectional dual-thread power energy flow scheduling and control closed-loop of the auxiliary power supply. The bidirectional dual-thread power energy flow scheduling and control closed-loop of the auxiliary power supply may be understood as performing energy flow control based on a bidirectional dual-thread closed-loop by using a method for energy flow control based on a bidirectional dual-thread closed-loop, so as to always maintain stable power scheduling and always establish a complete data flow, thereby providing stable, safe, and reliable connection of a unidirectional auxiliary power supply for the device. The foregoing bidirectional dual-thread power energy flow scheduling and control closed-loop of the auxiliary power supply can monitor and adjust energy allocation in real time, so as to ensure stable running of the system.

The foregoing bidirectional means that the inverter obtains multi-terminal data communication on a bus and returns a control value. The foregoing dual-thread means that when controlling the power of the energy flow, the inverter uses charging/discharging energy of the battery and output energy of the inverter to synchronously control the power energy flow of the system.

The foregoing direct current energy source is a PV photovoltaic panel, or the like.

The foregoing system refers to a hybrid energy storage inverter.

It should be noted that, when the output power determining result is that the output power is increased, an energy flow is increased for the battery charging/discharging or the direct current energy source such as a PV photovoltaic panel by using the preset energy scheduling closed-loop of the auxiliary power supply, to maximize the charging/discharging power of the inverter and the battery; and the output energy of the inverter is adjusted in a steady-state regulation phase, so as to reduce an energy flow input of the auxiliary power supply and avoid outputting energy to the auxiliary power supply node, thereby preventing impact on an auxiliary power supply device that has only a unidirectional energy output capability, and thus avoiding causing irreversible damage.

The foregoing steady-state regulation phase may be understood as maintaining the system in a stable state.

In another possible embodiment, when the output power determining result is that the output power is reduced, an energy flow is maintained for the battery charging/discharging or the direct current energy source such as a PV photovoltaic panel by using the preset energy scheduling closed-loop of the auxiliary power supply, and the output of the output energy of the inverter is cut off with a millisecond-level response, so as to avoid an instantaneous energy overflow to the auxiliary power supply node. Dual-thread control is mutually complementary and interdependent, without using single control data as a unique reference value for energy scheduling flow, so that there is a good steady-state regulation capability and an extremely high transient protection capability.

Optionally, after the step of performing energy flow control on battery charging/discharging or a direct current energy source by using a preset energy flow scheduling closed-loop of an auxiliary power supply based on the output power determining result, when the primary power supply is recovered, the auxiliary power supply side is switched to the primary power supply side by using the automatic switching signal to send a signal for switching from the auxiliary power supply to the primary power supply, and the preset energy scheduling and control closed-loop of the auxiliary power supply is exited to restore normal energy scheduling configuration for the user.

In this embodiment of this application, when the primary power supply is recovered, the auxiliary power supply side is switched to the primary power supply side by using an automatic switching signal. In this case, the auxiliary power supply is turned off, that is, the auxiliary power supply is no longer used to perform energy scheduling, and the preset energy scheduling and control closed-loop of the auxiliary power supply is exited to restore normal energy scheduling configuration for the user.

In this embodiment of this application, in this application, energy flow control is performed based on a bidirectional dual-thread closed-loop, so as to always maintain stable power scheduling and always establish a complete data flow, thereby providing stable, safe, and reliable connection of a unidirectional auxiliary power supply for the device, resolving a problem that an inverter device does not support connection of an auxiliary power supply when leaving the factory, providing a safe and reliable solution, and optimizing product performance.

### Embodiment 2

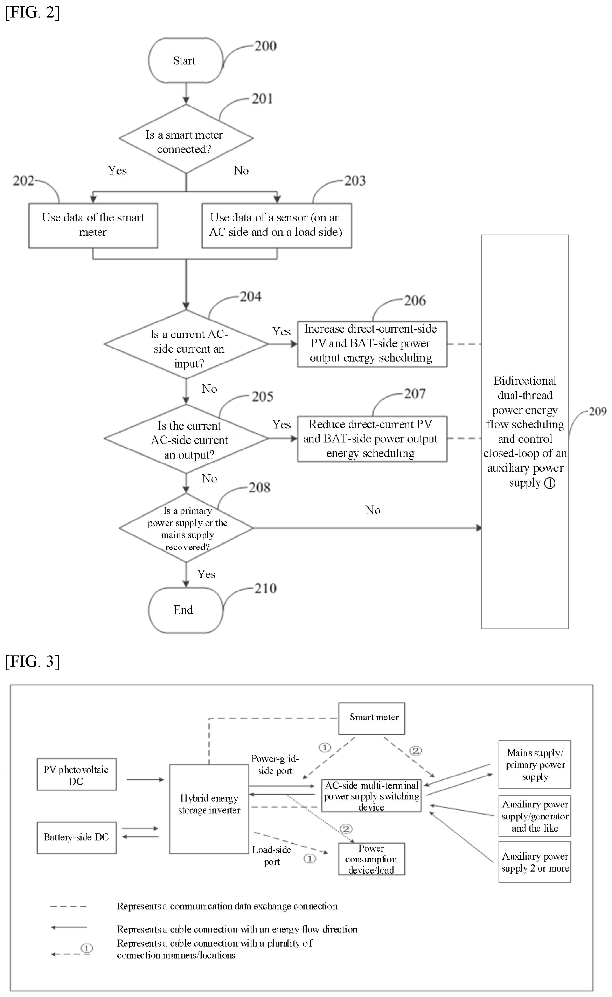

In this embodiment, FIG. 2 is a flowchart of another energy flow control method supporting auxiliary power supply intervention according to an embodiment of this application. The method specifically includes the following steps:
200: Start.
201: Is a smart meter connected?

If the smart meter is connected, step 202 is performed. Otherwise, data of an AC-side sensor and data of a load-side sensor are used, and step 203 is performed.

The foregoing smart meter is an electronic device that can monitor and record power usage status in real time.

202: Use data of the smart meter.

The data of the smart meter includes a parameter, a load status working condition, and the like of the smart meter.

203: Use the data of the sensor (on the AC side and on the load side).

The data of the AC-side sensor may be understood as parameters such as a voltage and a current in an alternating current circuit. The data of the load-side sensor includes but is not limited to data such as a voltage, a current, and a frequency.

204: Is a current AC-side current an input?

If yes, step 206 is performed. Otherwise, step 205 is performed.

205: Is the current AC-side current an output?

If yes, step 206 is performed. Otherwise, step 208 is performed.

206: Increase direct-current-side PV and BAT-side power output energy scheduling.

207: Reduce direct-current PV and BAT-side power output energy scheduling.

208: Is the primary power supply or the mains supply recovered?

If yes, step 210 is performed. Otherwise, step 209 is performed.

209: Bidirectional dual-thread power energy flow scheduling and control closed-loop of the auxiliary power supply ①.

The bidirectional dual-thread power energy flow scheduling and control closed-loop of the auxiliary power supply is a control system. Bidirectional dual-thread power energy flow scheduling and control are performed to always maintain stable power scheduling and always establish a complete data flow, thereby providing stable, safe, and reliable connection of a unidirectional auxiliary power supply for the device.

210: End.

In this embodiment of this application, in this application, without increasing hardware costs, the primary power supply and the auxiliary power supply may be used as alternating current energy of the system for the user to use, by using an existing alternating current power supply interface and an automatic switching apparatus. The bidirectional dual-thread closed-loop and energy flow control closed-loop of the auxiliary power supply can ensure that the energy flow is stable, safe, and reliable, both the output power of the entire inverter and the charging/discharging power of the battery follow the energy flow closed-loop in the case of the auxiliary power supply, and the energy overflow is precisely controlled, thereby reducing a risk of easily causing damage to the auxiliary power supply when the auxiliary power supply is a unidirectional power supply, resolving a problem that an inverter device does not support connection of an auxiliary power supply when leaving the factory, providing a safe and reliable solution, and optimizing product performance.

### Embodiment 3

In this embodiment, FIG. 3 is an explanatory diagram of a plurality of connection manners of a friendly hardware device platform circuit of an energy flow control method supporting auxiliary power supply intervention according to an embodiment of this application. The friendly hardware device platform circuit specifically includes a PV photovoltaic DC, a battery-side DC, a hybrid energy storage inverter, a smart meter, an AC-side multi-terminal power supply switching device, a power consumption device/load, a mains supply/a primary power supply, an auxiliary power supply/generator or the like, and an auxiliary power supply 2 or more. Using an inverter of a terminal device as a core, data capabilities of all link devices are invoked.

A cable on the PV photovoltaic DC side has a capability of outputting energy unidirectionally to the inverter. The battery-side DC has a capability of inputting and outputting energy bidirectionally to the inverter. The primary power supply connected to the AC-side multi-terminal power supply switching device has a capability of inputting and outputting energy bidirectionally to the inverter. The auxiliary power supply may be a power supply device that can only output energy unidirectionally to the inverter, or may be a power supply device that has a bidirectional capability.

Specifically, the smart meter may be connected to the inside or the outside of the AC-side multi-terminal power supply switching device. When the meter is damaged or connected to the outside ②, in this application, power-grid-side port data of the inverter is temporarily invoked. After the auxiliary power supply is recovered, the auxiliary power supply attempts to invoke data of the smart meter connected to a side ① or the side ② (either the side ① or the side ② may be selected or not connected, rather than both need to be connected). If no valid data is used, the power-grid-side port data of the inverter continues to be invoked to ensure a data link capability of an energy flow.

It should be noted that, ① represents a cable connection with a plurality of connection manners/locations, and ② represents being close to a power supply side rather than an inverter port side.

The power-grid-side port data of the inverter includes but is not limited to a voltage, a current, power, a frequency, and the like. A power consumption device/load may be connected to a power-grid-side port of the inverter. The side ① is connected to an EPS load port of the inverter, and energy scheduling synchronously uses load port data and the power-grid-side port data of the inverter or the data of the smart meter. The side ② is directly connected to a power supply on an alternating current side, and energy scheduling and control use the power-grid-side port data of the inverter or the data of the smart meter. Connecting to either the side ① or the side ② can obtain a timely energy response.

In this embodiment of this application, using the inverter as a core, the power-grid-side port is connected to the primary power supply and the auxiliary power supply by using the AC-side multi-terminal switching device. Regardless of whether a connection manner is connecting to the inside or the outside of the AC-side multi-terminal power supply switching device, and regardless of whether the auxiliary power supply is connected to the inside or the outside of the smart meter, this case can be identified in this application, thereby greatly reducing potential safety hazards caused by incorrect cabling, reducing difficulty in construction and mounting, and meeting a requirement of a user for improving flexible and convenient mounting.

### Embodiment 4

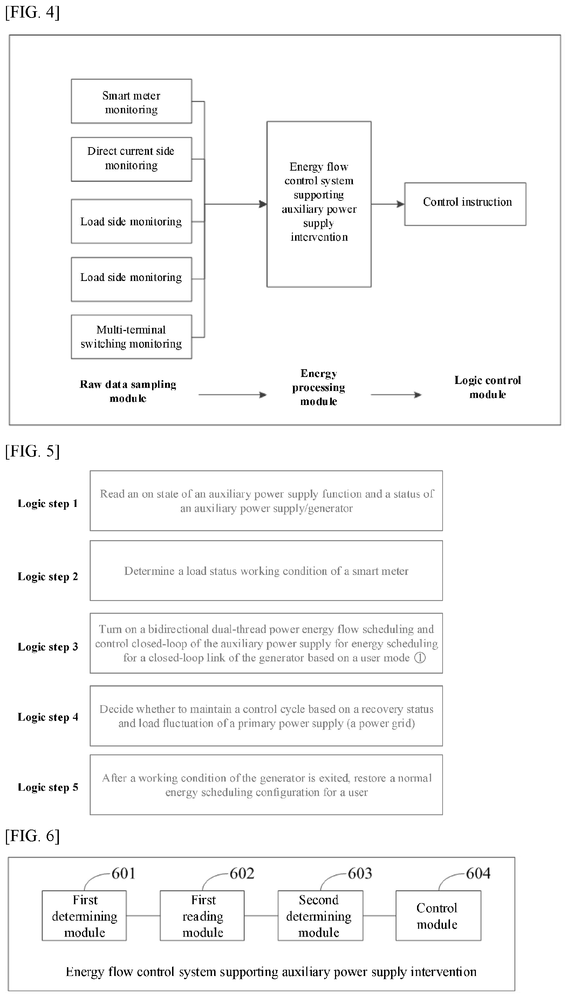

In this embodiment, FIG. 4 is a modular structural diagram of an energy flow control method supporting auxiliary power supply intervention according to an embodiment of this application. The modular structural diagram includes: smart meter monitoring, direct current side monitoring, alternating current side monitoring, load side monitoring, multi-terminal switching monitoring, an energy flow control method supporting auxiliary power supply intervention provided in this application, and a control instruction.

A raw data sampling module is configured to: read an enable state of an auxiliary power supply and a power output state of a primary power supply, and identify and monitor real-time states of the auxiliary power supply and the primary power supply.

An energy processing module is configured to perform the energy flow control method supporting auxiliary power supply intervention provided in this application.

A logic control module is configured to invoke the energy flow control method supporting auxiliary power supply intervention provided in this application to implement energy flow control for auxiliary power supply intervention.

In this embodiment, a smart meter, a direct current side, a load side, an alternating current side, and multi-terminal switching each have a data exchange capability. When a user does not have an external AC-side automatic switching device, the bidirectional dual-thread power energy scheduling and control closed-loop of the auxiliary power supply can still be used to ensure that a unidirectional power supply device is properly protected against impact in an energy ring in which the power supply device is connected to an inverter.

### Embodiment 5

In this embodiment, FIG. 5 is a flowchart of another energy flow control method supporting auxiliary power supply intervention according to an embodiment of this application. The method specifically includes the following steps:
Logic step 1: Read an on state of an auxiliary power supply function and a status of an auxiliary power supply/generator.
Logic step 2: Determine a load status working condition of a smart meter.
Logic step 3: Turn on a bidirectional dual-thread power energy flow scheduling and control closed-loop of the auxiliary power supply for energy scheduling for a closed-loop link of the generator based on a power consumption mode, which is an operation mode set by the user ①.

The generator may be understood as one of auxiliary power supplies.

Logic step 4: Decide whether to maintain a control cycle based on a recovery status and load fluctuation of a primary power supply (a power grid).

The primary power supply does not restore normal power supply, and energy flow control is performed on battery charging/discharging by using a bidirectional dual-thread power energy scheduling and control closed-loop of the auxiliary power supply based on an output power status of a parameter and the load status working condition of the smart meter.

The primary power supply restores normal power supply, and in this case, a working condition of the generator is exited to restore normal energy scheduling configuration for a user.

Logic step 5: After the working condition of the generator is exited, restore the normal energy scheduling configuration for the user.

When the primary power supply restores normal power supply, the auxiliary power supply side is switched to the primary power supply side, the generator is turned off, a bidirectional dual-thread power energy scheduling and control closed-loop of the auxiliary power supply is exited, an original user setting mode is restored, and normal energy scheduling configuration is performed.

In this embodiment, in this application, energy flow control is performed based on a bidirectional dual-thread closed-loop, so as to always maintain stable power scheduling and always establish a complete data flow, thereby resolving a problem such as poor compatibility of an energy system. An unstable factor such as a frequency and a phase may exist in a unidirectional auxiliary power supply, and directly connecting the unidirectional auxiliary power supply to the system causes the system to be unstable and unreliable, or even poses a risk of damage to a plurality of devices. This application provides stable, safe, and reliable connection of a unidirectional auxiliary power supply for a device, uses a trusted energy flow scheduling mechanism to help different link devices connect to a closed-loop system, and promotes sustainable development of an energy storage link device.

### Embodiment 6

Based on the foregoing Embodiment 1, FIG. 6 is a schematic diagram of a structure of an energy flow control system supporting auxiliary power supply intervention according to an embodiment of this application. The energy flow control system supporting auxiliary power supply intervention is configured to perform the energy flow control method supporting auxiliary power supply intervention provided in the embodiments of this application. The energy flow control system supporting auxiliary power supply intervention includes:
a first determining module 601, configured to determine whether a smart meter is connected;
a first reading module 602, configured to: read data of the smart meter if the smart meter is connected; otherwise, use data of a load-side sensor;
a second determining module 603, configured to perform output power determining on current data of the smart meter or current data of the load-side sensor when a primary power supply is disconnected, to obtain an output power determining result; and
a control module 604, configured to perform energy flow control on battery charging/discharging or a direct current energy source by using a preset energy scheduling closed-loop of an auxiliary power supply based on the output power determining result.

Optionally, the system further includes:
a second reading module, configured to read an enable state of an auxiliary power supply, where the enable state of the auxiliary power supply includes an on state and an off state; and
a first switching module, configured to: after the on state of the auxiliary power supply is read, when the primary power supply is disconnected, switch to the auxiliary power supply by using an automatic switching signal to send a signal for switching to the auxiliary power supply.

Optionally, the first reading module 602 includes:
a first reading submodule, configured to read a set value of a user; and
a second reading submodule, configured to read, based on the set value of the user, the data of the smart meter when the primary power supply is disconnected.

Optionally, the second determining module 603 includes:
a first determining submodule, configured to perform first output power determining on the current data of the smart meter or the current data of the load-side sensor when the primary power supply is disconnected, to determine that an output power needs to be increased; and
a second determining submodule, configured to perform second output power determining on the current data of the smart meter or the current data of the load-side sensor, to determine that the output power needs to be reduced.

Optionally, the control module 604 includes:
a first processing submodule, configured to: when the output power determining result is that the output power is increased, increase an energy flow for the battery charging/discharging or the direct current energy source by using the preset energy scheduling closed-loop of the auxiliary power supply, and reduce an energy flow input of the auxiliary power supply in a steady-state regulation phase; and
a second processing submodule, configured to: when the output power determining result is that the output power is reduced, maintain an energy flow for the battery charging/discharging or the direct current energy source by using the preset energy scheduling closed-loop of the auxiliary power supply, and cut off a system output.

Optionally, the system further includes:
a second switching module, configured to: when the primary power supply is recovered, switch from the auxiliary power supply side to the primary power supply side by using the automatic switching signal to send a signal for switching from the auxiliary power supply to the primary power supply, and exit the preset energy scheduling closed-loop of the auxiliary power supply to restore normal energy scheduling configuration for the user.

### Embodiment 7

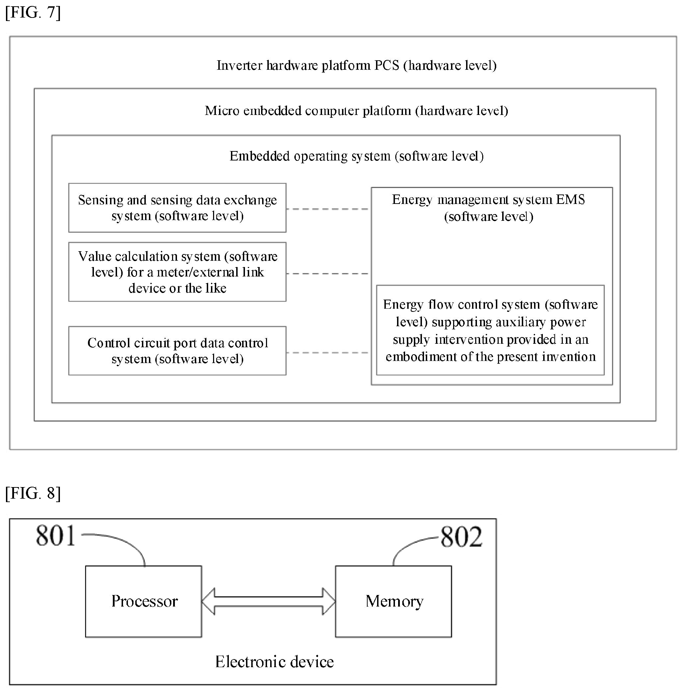

Based on the foregoing Embodiment 6, FIG. 7 is a schematic diagram of a structure of a real-time operating system for an embedded computer in a hybrid energy storage inverter according to an embodiment of this application. The system includes a hardware computer platform and an energy flow control system supporting auxiliary power supply intervention, and the foregoing hardware computer platform is provided with an energy management system. The foregoing energy flow control system supporting auxiliary power supply intervention provided in the embodiments of this application is embedded into the management system of the hardware computer platform.

In this embodiment, this application may run in the real-time operating system for an embedded computer in a hybrid energy storage inverter. An inverter serves as the hardware computer platform, the hardware platform is provided with the energy management system (EMS), and the energy flow control system supporting auxiliary power supply intervention in this application is embedded into the energy management system EMS.

In this application, an energy flow control closed-loop capability of connecting an auxiliary power supply is implemented through firmware update of an inverter device system, without increasing any hardware costs or additional overheads, thereby resolving a problem that an inverter device does not support connection of an auxiliary power supply when leaving the factory, providing a safe and reliable solution, and optimizing product performance.

In this application, energy flow control is performed based on a bidirectional dual-thread closed-loop, so as to always maintain stable power scheduling and always establish a complete data flow, thereby resolving a problem such as poor compatibility of an energy system. An unstable factor such as a frequency and a phase may exist in a unidirectional auxiliary power supply, and directly connecting the unidirectional auxiliary power supply to the system causes the system to be unstable and unreliable, or even poses a risk of damage to a plurality of devices. This application provides stable, safe, and reliable connection of a unidirectional auxiliary power supply for a device, uses a trusted energy flow scheduling mechanism to help different link devices connect to a closed-loop system, and promotes sustainable development of an energy storage link device.

### Embodiment 8

Refer to FIG. 8. FIG. 8 is a schematic diagram of a structure of an electronic device according to an embodiment of this application. As shown in FIG. 8, the electronic device includes a memory 802, a processor 801, and a computer program of an energy flow control method supporting auxiliary power supply intervention that is stored in the memory 802 and that is capable of running on the processor 801.

The electronic device provided in this embodiment of this application can implement processes of the energy flow control method supporting auxiliary power supply intervention, and can achieve same beneficial effects. To avoid repetition, details are not described herein again.

An embodiment of this application further provides a computer-readable storage medium. The computer-readable storage medium stores a computer program, and when the computer program is executed by a processor, the processes of the energy flow control method supporting auxiliary power supply intervention provided in the embodiments of this application are implemented, and same technical effects can be achieved. To avoid repetition, details are not described herein again.

A person of ordinary skill in the art may understand that all or some of the procedures of the methods in the foregoing embodiments may be implemented by a computer program instructing related hardware. The computer program may be stored in a computer-readable storage medium. When the program is executed, the procedures in the foregoing method embodiments may be included. The computer-readable storage medium may be a magnetic disk, an optical disc, a read-only memory (Read-Only Memory, ROM), a random access memory (Random Access Memory, RAM for short), or the like.

The foregoing disclosures are merely preferred embodiments of this application, and certainly are not intended to limit the scope of claims of this application. Therefore, equivalent changes made according to the claims of this application shall fall within the scope of this application.

## Claims

1. An energy flow control method supporting auxiliary power supply intervention, wherein the method comprises:
determining whether a smart meter is connected;
reading data of the smart meter if the smart meter is connected; otherwise, using data of a load-side sensor;
performing output power determining on current data of the smart meter or current data of the load-side sensor when a primary power supply is disconnected, to obtain an output power determining result; and
performing energy flow control on battery charging/discharging or a direct current energy source by using a preset energy scheduling closed-loop of an auxiliary power supply based on the output power determining result.

2. The energy flow control method supporting auxiliary power supply intervention according to claim 1, wherein before the step of reading data of the smart meter if the smart meter is connected; otherwise, using data of a load-side sensor, the method further comprises:
reading an enable state of the auxiliary power supply, wherein the enable state of the auxiliary power supply comprises an on state and an off state; and
after the on state of the auxiliary power supply is read, when the primary power supply is disconnected, switching to the auxiliary power supply by using an automatic switching signal to send a signal for switching to the auxiliary power supply.

3. The energy flow control method supporting auxiliary power supply intervention according to claim 2, wherein the step of reading data of the smart meter comprises:
reading a set value of a user; and
reading, based on the set value of the user, the data of the smart meter when the primary power supply is disconnected.

4. The energy flow control method supporting auxiliary power supply intervention according to claim 3, wherein the step of performing output power determining on current data of the smart meter or current data of the load-side sensor when a primary power supply is disconnected, to obtain an output power determining result comprises:
performing first output power determining on the current data of the smart meter or the current data of the load-side sensor when the primary power supply is disconnected, to determine that an output power needs to be increased; and
performing second output power determining on the current data of the smart meter or the current data of the load-side sensor, to determine that the output power needs to be reduced.

5. The energy flow control method supporting auxiliary power supply intervention according to claim 4, wherein the step of performing energy flow control on battery charging/discharging or a direct current energy source by using a preset energy scheduling closed-loop of an auxiliary power supply based on the output power determining result comprises:
when the output power determining result is that the output power is increased, increasing an energy flow for the battery charging/discharging or the direct current energy source by using the preset energy scheduling closed-loop of the auxiliary power supply, and reducing an energy flow input of the auxiliary power supply in a steady-state regulation phase; or
when the output power determining result is that the output power is reduced, maintaining an energy flow for the battery charging/discharging or the direct current energy source by using the preset energy scheduling closed-loop of the auxiliary power supply, and cutting off a system output.

6. The energy flow control method supporting auxiliary power supply intervention according to claim 5, wherein after the step of performing energy flow control on battery charging/discharging or a direct current energy source by using a preset energy flow control closed-loop of an auxiliary power supply based on the output power determining result, the method further comprises:
when the primary power supply is recovered, switching from the auxiliary power supply side to the primary power supply side by using the automatic switching signal to send a signal for switching from the auxiliary power supply to the primary power supply, and exiting the preset energy scheduling closed-loop of the auxiliary power supply to restore normal energy scheduling configuration for the user.

7. An energy flow control system supporting auxiliary power supply intervention, wherein the energy flow control system supporting auxiliary power supply intervention is configured to perform the energy flow control method supporting auxiliary power supply intervention according to any one of claims 1 to 6.

8. A real-time operating system for an embedded computer in a hybrid energy storage inverter, wherein the system comprises a hardware computer platform and an energy flow control system supporting auxiliary power supply intervention, the hardware computer platform is provided with an energy management system, and the energy flow control system supporting auxiliary power supply intervention according to claim 7 is embedded into the management system of the hardware computer platform.

9. An electronic device, comprising a memory, a processor, and a computer program that is stored in the memory and that is capable of running on the processor, wherein when the processor executes the computer program, the steps of the energy flow control method supporting auxiliary power supply intervention according to any one of claims 1 to 6 are implemented.

10. A computer-readable storage medium, wherein the computer-readable storage medium stores a computer program, and when the computer program is executed by a processor, the steps of the energy flow control method supporting auxiliary power supply intervention according to any one of claims 1 to 6 are implemented.
